(19)

Europäisches
Patentamt

European
Patent Office

Office européen
des brevets

(11) **EP 2 840 545 A1**

(12) **EUROPEAN PATENT APPLICATION**
published in accordance with Art. 153(4) EPC

(43) Date of publication:
**25.02.2015 Bulletin 2015/09**

(21) Application number: **13777647.2**

(22) Date of filing: **11.04.2013**

(51) Int Cl.:
*G06Q 50/06* (2012.01)      *H02J 3/00* (2006.01)
*H02J 3/32* (2006.01)       *H02J 3/38* (2006.01)
*H02J 3/46* (2006.01)       *H02J 13/00* (2006.01)

(86) International application number:
**PCT/JP2013/060955**

(87) International publication number:
**WO 2013/157481 (24.10.2013 Gazette 2013/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.04.2012 JP 2012092887**

(71) Applicant: **Kabushiki Kaisha Toshiba
Minato-ku
Tokyo 105-8001 (JP)**

(72) Inventors:
• **KATAYAMA, Kyosuke
Tokyo 105-8001 (JP)**

• **MURAI, Masahiko
Tokyo 105-8001 (JP)**
• **KUBOTA, Kazuto
Tokyo 105-8001 (JP)**
• **TANIMOTO, Tomohiko
Tokyo 105-8001 (JP)**
• **MATSUE, Kiyotaka
Tokyo 105-8001 (JP)**
• **YAMAGISHI, Masayuki
Tokyo 105-8001 (JP)**

(74) Representative: **Granleese, Rhian Jane
Marks & Clerk LLP
90 Long Acre
London WC2E 9RA (GB)**

(54) **ENERGY MANAGEMENT SYSTEM, ENERGY MANAGEMENT METHOD, PROGRAM, SERVER DEVICE, AND CLIENT DEVICE**

(57)   According to an embodiment, an energy management system includes a client apparatus and a server apparatus capable of communicating with the client apparatus. The server apparatus includes an acquisition unit, an estimation unit, a calculator, and a controller. The acquisition unit acquires, from the client apparatus, data concerning electrical equipment of a customer to which a power grid supplies power. The estimation unit estimates the energy demand of the electrical equipment based on the acquired data. The calculator calculates the operation schedule of the electrical equipment, which can optimize the energy balance of the customer, based on the estimated energy demand. The controller transmits control information to control the electrical equipment based on the calculated operation schedule to the client apparatus.

F I G. 2

EP 2 840 545 A1

## Description

Technical Field

Embodiments described herein relate generally to a technique of managing energy.

Background Art

The efforts to save energy are becoming increasingly important not only in large facilities such as buildings and factories but also in individual households. There are needs growing for introducing production-type electrical equipment such as a photovoltaic power generation (PV) apparatus, a storage battery (battery), or a fuel cell (to be referred to as an FC unit hereinafter) as well as electrical equipment that only consumes power.

Power saving can be implemented by operating the electrical equipment according to a schedule. However, the user needs a great deal of time and effort to manage the operation schedules of a plurality of pieces of electrical equipment. To systematically manage the supply and demand of energy, introducing an energy management system (EMS) has been examined. For example, a management system for household use is known as HEMS (Home Energy Management System).

For an energy management system including a PV apparatus and a storage battery device, there has been proposed estimating a power demand and the power generation amount of the PV apparatus, and calculating and deciding the operation schedule of electrical equipment based on the estimated demand and the estimated power generation amount.

To calculate the operation schedule of the electrical equipment, there has also been proposed optimizing the operation schedule of the electrical equipment by optimization calculation for minimizing the evaluation function under constraints.

Citation List

Patent Literatures

Patent Literature 1: Jpn. Pat. Appln. KOKAI Publication No. 2011-92002

Patent Literature 2: Jpn. Pat. Appln. KOKAI Publication No. 2010-204833

Patent Literature 3: Jpn. Pat. Appln. KOKAI Publication No. 2011-83084

Patent Literature 4: Jpn. Pat. Appln. KOKAI Publication No. 06-276681

Patent Literature 5: Jpn. Pat. Appln. KOKAI Publication No. 2004-112869

Patent Literature 6: Jpn. Pat. Appln. KOKAI Publication No. 2011-200040

Patent Literature 7: Jpn. Pat. Appln. KOKAI Publication No. 2009-240080

Summary of Invention

Technical Problem

Since a lot of factors are intricately involved in energy estimation and calculation of an operation schedule, the load of calculation is heavy in general. Processing of this type requires a high-performance computer. Individually preparing such a computer places significant burdens on the customers.

It is an object of the present invention to provide an energy management system, an energy management method, a program, a server apparatus, and a client apparatus, which can solve the above-described problem.

Solution to Problem

According to an aspect, an energy management system includes a plurality of client apparatuses and a server apparatus capable of communicating with the plurality of client apparatuses. The server apparatus includes an acquisition unit, an estimation unit, a calculator, and a controller. The acquisition unit acquires, from the client apparatus, data concerning electrical equipment to which a power grid supplies power. The estimation unit estimates an energy demand of the electrical equipment based on the data. The calculator calculates an operation of the electrical equipment to optimize energy concerning the electrical equipment based on the estimated energy demand. The controller transmits control information to control the electrical equipment based on the calculated operation to the client apparatus.

Brief Description of Drawings

[FIG. 1] FIG. 1 is a view showing an example of a system according to an embodiment.
[FIG. 2] FIG. 2 is a view showing an example of an energy management system according to the embodiment.
[FIG. 3] FIG. 3 is a functional block diagram showing an example of an energy management system according to the first embodiment.
[FIG. 4] FIG. 4 is a block diagram for explaining a control target model.
[FIG. 5] FIG. 5 is a flowchart showing an example of a processing procedure according to the first embodiment.
[FIG. 6] FIG. 6 is a flowchart showing an example of the procedure of an optimization operation according to the embodiment.
[FIG. 7] FIG. 7 is a schematic view showing transition of the calculation load in a day.
[FIG. 8] FIG. 8 is a view for explaining the effect of an energy management system according to the second embodiment.
[FIG. 9] FIG. 9 is a functional block diagram showing an example of an energy management system according to the third embodiment.
[FIG. 10] FIG. 10 is a view for explaining the effect of an energy management system according to the fifth embodiment.
[FIG. 11] FIG. 11 is a view for explaining the effect according to the fifth embodiment.
[FIG. 12] FIG. 12 is a view for explaining the effect according to the fifth embodiment.
[FIG. 13] FIG. 13 is a functional block diagram showing an example of an energy management system according to the sixth embodiment.
[FIG. 14] FIG. 14 is a view for explaining the effect of the energy management system according to the sixth embodiment.
[FIG. 15] FIG. 15 is a view showing an example of contents displayed on a terminal 105 according to the sixth embodiment.
[FIG. 16] FIG. 16 is a functional block diagram showing a characteristic feature of an energy management system according to the seventh embodiment.
[FIG. 17] FIG. 17 is a view for explaining the effect according to the seventh embodiment.
[FIG. 18] FIG. 18 is a view for explaining the effect according to the seventh embodiment.

Description of Embodiments

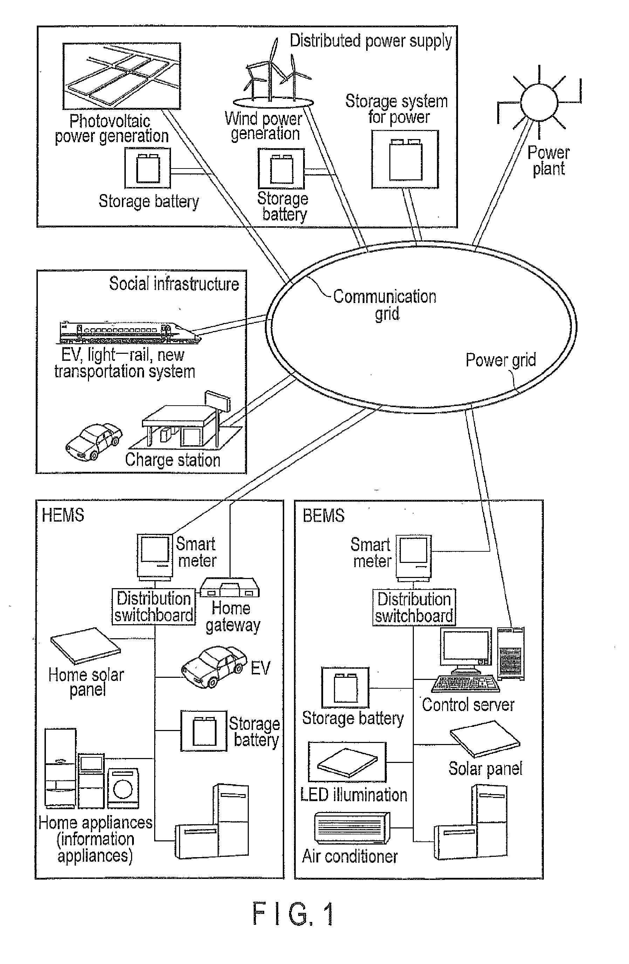

FIG. 1 is a view showing an example of a system according to an embodiment. FIG. 1 illustrates an example of a system known as a so called smart grid. In an existing grid, existing power plants such as a nuclear power plant, a thermal power plant, and a hydroelectric power plant are connected to various customers such as an ordinary household, a building, and a factory via the grid. In the next generation power grid, distributed power supplies such as a PV (Photovoltaic Power generation) system and a wind power plant, battery devices, new transportation systems, charging stations, and the like are additionally connected to the power grid. The variety of elements can communicate via a communication grid.

Systems for managing energy are generically called EMS's (Energy Management Systems). The EMS's are classified into several groups in accordance with the scale and the like. There are, for example, an HEMS (Home Energy Management System) for an ordinary household and a BEMS (Building Energy Management System) for a building. There also exist an MEMS (Mansion Energy Management System) for an apartment house, a CEMS (Community Energy Management System) for a community, and a FEMS (Factory Energy Management System) for a factory. Fine energy optimization control is implemented by causing these systems to cooperate.

According to these systems, an advanced cooperative operation can be performed between the existing power plants, the distributed power supplies, the renewable energy sources such as sunlight and wind force, and the customers. This allows to produce a power supply service in a new and smart form, such as an energy supply system mainly using a natural energy or a customer participating type energy supply/demand system by bidirectional cooperation of customers and companies.

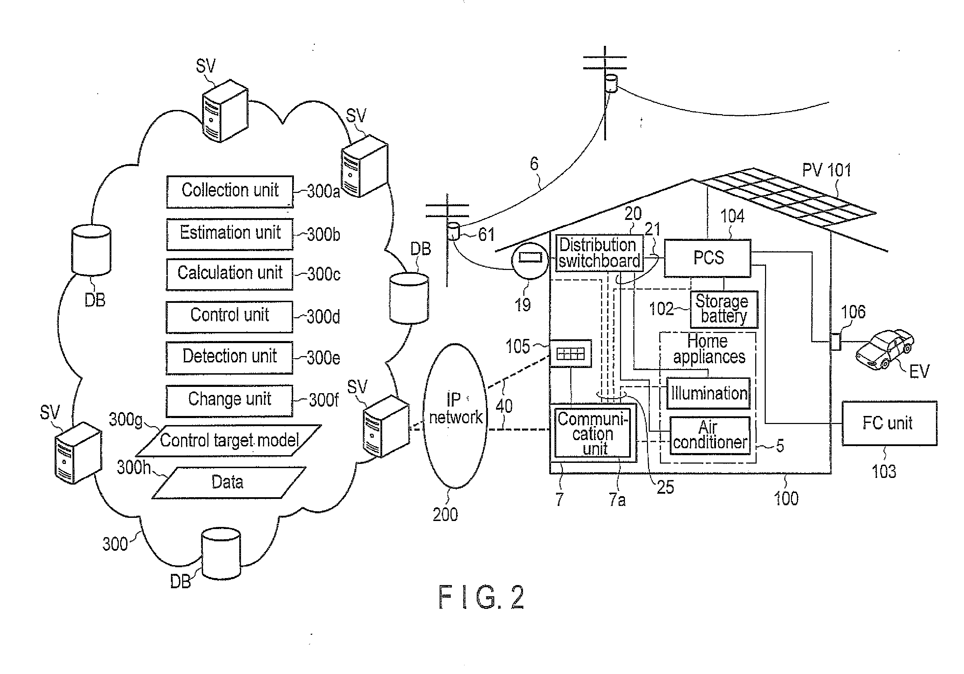

FIG. 2 is a view showing an example of an energy management system according to the embodiment. This system includes a client system, and a cloud computing system 300 serving as a server system capable of communicating with the client system. An example will be described below in which energy of a customer (user) to which a power grid supplies power is managed. The customer includes electrical equipment. The power grid supplies power to the electrical equipment as well.

A home 100 to which the power grid supplies power includes a home gateway (HGW) 7 that is an example of the client system. The home gateway 7 can receive various kinds of services offered by the cloud computing system 300.

The cloud computing system 300 includes a server computer SV and a database DB. The server computer SV can include a single or a plurality of server computers. The databases DB can be either provided in the single server computer SV or distributively arranged for the plurality of server computers SV.

Referring to FIG. 2, power (AC power) supplied from a power grid 6 is distributed to households via, for example, a transformer 61 mounted on a pole. The distributed power is supplied to a distribution switchboard 20 in the home 100 via a watt-hour meter (smart meter) 19. The watt-hour meter 19 has a function of measuring the power generation amount of a renewable energy power generation system provided in the home 100, the power consumption of the home 100, the electric energy supplied from the power grid 6, the amount of reverse power flow to the power grid 6, and the like.

The distribution switchboard 20 supplies, via distribution lines 21, power to electrical equipment (for example, lighting equipment, air conditioner, and heat pump water heater (HP)) 5 and a power conditioning system (PCS) 104 connected to the distribution switchboard 20. The distribution switchboard 20 also includes a measuring device for measuring the electric energy for each feeder.

The electrical equipment 5 is equipment connectable to the distribution line 21 in the customer home, and corresponds to at least one of equipment that consumes power, equipment that generates power, and equipment that consumes and generates power. For example, an electric vehicle EV and a PV system 101 are also included in the electrical equipment 5. The electrical equipment 5 is detachably connected to the distribution line 21 via a socket (not shown) and then connected to the distribution switchboard 20 via the distribution line 21.

The PV system 101 includes a solar panel installed on the roof or exterior wall of the home 100. DC power generated by the PV system 101 is supplied to the PCS 104. The PCS 104 gives the DC power to a storage battery 102 and charges the storage battery 102 of the home 100. The PV system 101 is positioned as an energy generation apparatus that generates energy used to operate the electrical equipment 5 from renewable energy. A wind power generation system or the like is also categorized as the energy generation apparatus.

The PCS 104 includes a converter (not shown). The PCS 104 converts AC power from the distribution line 21 into DC power and supplies it to the storage battery 102. The power supplied from the power grid 6 can be stored in the storage battery 102 even at midnight.

The PCS 104 includes an inverter (not shown). The PCS 104 converts DC power supplied from the storage battery 102 or an FC unit 103 into AC power and supplies it to the distribution line 21. The PCS 104 can supply power from the storage battery 102 or the FC unit 103 to the electrical equipment.

That is, the PCS 104 has the function of a power converter configured to transfer power between the distribution line 21 and the storage battery 102 or the FC unit 103. The PCS 104 also has a function of stably controlling the storage battery 102 and the FC unit 103. The PCS 104 also distributes power to a connector 106 connectable to the electric vehicle EV. The onboard battery of the electric vehicle EV can thus be charged/discharged.

The home 100 includes a home network 25. The home network 25 is a communication network such as a LAN (Local Area Network). The home network 25 can be either a wired network or a wireless network.

The home gateway 7 is detachably connected to the home network 25 and an IP network 200 via an interface (not shown) or the like. The home gateway 7 can thus communicate with the watt-hour meter 19, the distribution switchboard 20, the PCS 104, and the electrical equipment 5 connected to the home network 25.

The home gateway 7 includes a communication unit 7a as a processing function according to the embodiment. The communication unit 7a transmits various kinds of data to the cloud computing system 300 and receives various kinds of data from the cloud computing system 300. That is, the home gateway 7 transmits various kinds of data to the cloud computing system 300 and receives various kinds of data from the cloud computing system 300.

The home gateway 7 is a computer including a CPU (Central Processing Unit) and a memory (neither are shown). The memory stores programs according to the embodiment. The programs include, for example, a command to communicate with the cloud computing system 300, a command to request the cloud computing system 300 to calculate an operation schedule concerning the operation of electrical equipment, and a command to reflect a customer's intention on system control. The CPU functions based on various kinds of programs, thereby implementing various functions of the home gateway 7.

The home gateway 7 is a client apparatus capable of communicating with the cloud computing system 300 and the server computer SV. Various kinds of data transmitted from the home gateway 7 include request signals to request the cloud computing system 300 to do various kinds of operations.

The home gateway 7 is connected to a terminal 105 via a wired or wireless network. The functions of the client apparatus can also be implemented by cooperative processing between the home gateway 7 and the terminal 105. The terminal 105 can be, for example, a general-purpose portable information device, personal computer, or tablet terminal as well as a so-called touch panel.

The terminal 105 notifies the user of the operation state and power consumption of each of the electrical equipment 5, the FC unit 103, the storage battery 102, and the PV system 101. To notify the user of these pieces of information, for example, display on an LCD (liquid crystal display) or voice guidance is used. The terminal 105 includes an operation panel and receives various kinds of operations and setting input by the user.

The IP network 200 is, for example, the so-called Internet or a VPN (Virtual Private Network) of a system vendor. The home gateway 7 can communicate with the server computer SV or send/receive data to/from the database DB via the IP network 200. The IP network 200 can include a wireless or wired communication infrastructure to form a bidirectional communication environment between the home gateway 7 and the cloud computing system 300.

The cloud computing system 300 includes a collection unit 300a, an estimation unit 300b, a calculation unit 300c, a control unit 300d, a detection unit 300e, and a change unit 300f. The database DB of the cloud computing system 300 stores a control target model 300g and various kinds of data 300h. The collection unit 300a, the estimation unit 300b, the calculation unit 300c, the control unit 300d, the detection unit 300e, and the change unit 300f are functional objects arranged in the single server computer SV or distributively arranged in the cloud computing system 300. How to implement these functional objects in the system can easily be understood by those skilled in the art.

For example, the collection unit 300a, the estimation unit 300b, the calculation unit 300c, the control unit 300d, the detection unit 300e, and the change unit 300f are implemented as programs to be executed by the server computer SV of the cloud computing system 300. The programs can be executed by either a single computer or a system including a plurality of computers. When the commands described in the programs are executed, various functions according to the embodiment are implemented.

The collection unit 300a acquires various kinds of data concerning the electrical equipment 5 of the home 100 from the home gateway 7 of the home 100. The acquired data are stored in the database DB as the data 300h. The data 300h include the power demand of each home 100, the power consumption of each electrical equipment 5, a hot water supply amount, an operation state, the charged battery level and the amount of charged/discharged power of the storage battery 102, and the power generation amount of the PV system 101. These data concern the devices connected to the distribution lines 21 of the home 100 and are used for energy demand estimation or the like.

The estimation unit 300b estimates the energy demand of each electrical equipment 5 on a time basis and the total energy demand in the home 100 on a time basis based on the data acquired by the collection unit 300a. The estimation unit 300 estimates the power demand, hot water demand, PV power generation amount, and the like of the home 100.

The control target model 300g abstracts the storage battery 102 or the FC unit 103. The calculation unit 300c calculates the charge/discharge schedule of the storage battery 102 based on the control target model 300g of the storage battery 102, the estimated power demand, and the estimated hot water demand and PV power generation amount. The calculation unit 300c also calculates the power generation schedule of the FC unit 103 based on the control target model 300g of the FC unit 103, the estimated power demand, and the estimated hot water demand and PV power generation amount.

That is, the calculation unit 300c decides the operation of the electrical equipment 5 so as to optimize the energy in the home 100 based on the estimated energy demand. That is, the calculation unit 300c calculates the operation schedule concerning the operation of the electrical equipment 5, which can optimize the energy balance in the home 100, based on the estimated energy demand. This processing is called optimal scheduling.

The energy balance is, for example, the heat/electricity balance. The heat/electricity balance is evaluated by, for example, the balance between the cost of power consumed by the electrical equipment 5 and the sales price of power mainly generated by the PV system 101. The calculated time-series operation schedule of the electrical equipment 5 is stored in the database DB.

The control unit 300d generates control information to control the electrical equipment 5 based on the calculated operation schedule. That is, the control unit 300d generates operation and stop instructions, output target values, and the like for charge/discharge and operation of the storage battery 102 or power generation of the FC unit 103, based on the result of optimal scheduling. These pieces of control information are transmitted to the terminal 105 or the home gateway 7 in the home 100 via a communication line 40.

The detection unit 300e detects a load concerning calculation of the operation schedule by the calculation unit 300c. The load is the processing load of the server computer SV, time necessary to read out data from the database DB, a communication load in the cloud computing system 300, or the like. The change unit 300f changes parameters concerning calculation of the operation schedule to prevent the detected load from exceeding a standard.

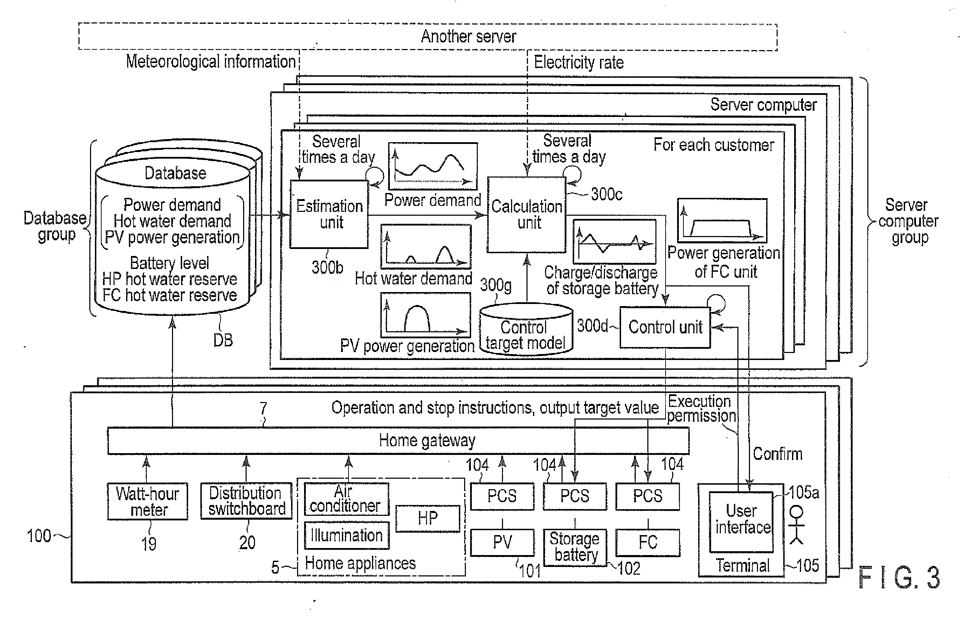

The terminal 105 of the home 100 includes an interface unit (interface unit 105a shown in FIG. 3). The interface unit 105a can be used to reflect the user's intention on the control information transmitted from the control unit 300d.

That is, the electrical equipment 5 can be controlled based on not only the control information but also the user's intention.

The interface unit 105a includes a display device. The display device displays the charge/discharge schedule of the storage battery 102, the power generation schedule of the FC unit 103, or the like. The user can see the contents displayed on the display device and confirm the schedule or select permission or rejection of execution of the displayed schedule. The customer's intention can thus be reflected on schedule execution.

The customer can also input, via the interface unit 105a, an instruction (command) to request the cloud computing system 300 to recalculate the schedule or information necessary for schedule calculation.

It can be understood that in the above-described arrangement, the server computer is positioned as a main apparatus, and the home gateway is positioned as a sub-apparatus that receives a control signal from the main apparatus. A plurality of embodiments will now be described based on the above-described arrangement.

[First Embodiment]

FIG. 3 is a functional block diagram showing an example of an energy management system according to the first embodiment. Referring to FIG. 3, various kinds of data are periodically or aperiodically transmitted from a PCS 104, electrical equipment 5, a storage battery 102, an FC unit 103, a watt-hour meter 19, and a distribution switchboard 20 of a home 100 to a cloud computing system 300 via a home gateway 7. The data include, for example, the power consumption and operation state of each electrical equipment 5 for every predetermined time, the charged battery level and the amount of charged/discharged power of the storage battery 102, and the power demand, hot water demand, and PV power generation amount of the home 100.

For example, if the sensing value of one of the data deviates from the default value, the home gateway 7 transmits the data of interest to the cloud computing system 300. "Aperiodic" means transmission at such a timing. The default value representing the range where the data should be can be set by the customer via an interface unit 105a. The operation history of the terminal 105 by the customer and the like are also transmitted to the cloud computing system 300. These data and information are stored in databases DB.

An estimation unit 300b estimates the power demand, hot water demand, and PV power generation amount for every predetermined time of a target day using meteorological information such as a weather forecast in addition to the collected power demand, hot water demand, and PV power generation amount. The meteorological information is distributed from another server (for example, Meteorological Agency) at several timings a day. The estimation calculation may be executed in synchronism with the timing of meteorological information reception.

A calculation unit 300c executes optimal scheduling concerning operation control of the electrical equipment 5 based on the energy demand for every predetermined time calculated by estimation calculation, the electricity rate, and a control target model 300g.

The estimation unit 300b and the calculation unit 300c can be implemented in the cloud computing system 300 as, for example, functional objects dedicated to each customer. That is, the functions of the estimation unit 300b and the calculation unit 300c can be provided for each customer. Such a form can be obtained by, for example, creating a plurality of threads in the program execution process. This form is advantageous because, for example, security can easily be retained.

Alternatively, the estimation unit 300b and the calculation unit 300c can be implemented as functional objects provided for a plurality of customers. That is, the operations by the estimation unit 300b and the calculation unit 300c can be executed for a group of a plurality of customers. This form is advantageous because, for example, the calculation resource can be saved.

For example, a case in which the estimation unit 300b includes the PV power generation amount estimation function has a great affinity for such a form. That is, the estimation unit 300b or a module (PV power generation estimation unit: not shown) for estimating the PV power generation amount can be provided commonly for customers in a predetermined area. This is because the PV power generation amount is closely related to the weather, and the weather is a phenomenon in an area wide to some extent. Details will be described later.

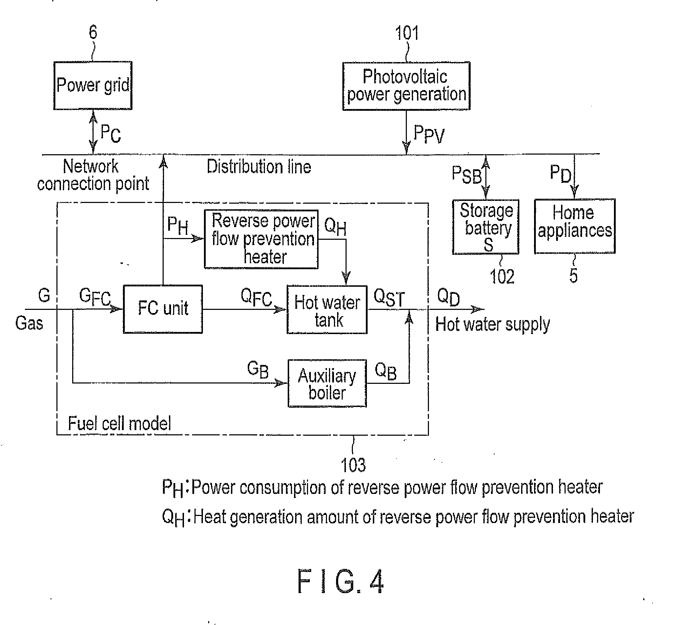

FIG. 4 is a block diagram for explaining the control target model. The control target model according to this embodiment includes the input/output model of one or both of the storage battery 102 and the FC unit 103, and the supply and demand balance model of one or both of electricity and heat. The control target model includes a constraint to limit the amount of reverse power flow to the power grid 6 and a constraint to indicate one or both of the capacity of the storage battery and the capacity of the hot water tank of the FC unit.

Let $P_{FC}(t)$ be the power generation amount of the FC unit 103 corresponding to a gas supply $G_{FC}(t)$. In the input/output model of the FC unit 103, the power generation amount $P_{FC}(t)$ can be expressed as $P_{FC}(t) = f(G_{FC}(t))$, where (t) is an index representing a time t. Let $Q_{FC}(t)$ be the waste heat amount of the FC unit 103 corresponding to the supply $G_{FC}(t)$. The waste heat amount $Q_{FC}(t)$ can be expressed as $Q_{FC}(t) = g(G_{FC}(t))$.

When the storage battery having a charged battery level $S(t)$ is charged/discharged by power $P_{SB}(t)$, the input/output model of the storage battery 102 is represented by

$$S(t) = S(t-1) - \beta P_{SB}(t) \tag{1}$$

$\beta$: a coefficient representing the loss at the time of charge/discharge.

The supply and demand balance model of power can be expressed as, for example, equation (2), where PD(t) is the power consumption, that is, the power demand of the electrical equipment 5, $P_C(t)$ is power purchased from the power grid 6 or power sold to the power grid 6, and $P_{PV}(t)$ is the power generation amount of the PV system 101.

The supply and demand balance model, of heat can be expressed as, for example, equations (3) and (4), where $Q_D(t)$ is the hot water demand, and H(t) is the hot water reserve. A hot water demand $Q_B(t)$ that cannot be covered by a hot water supply $Q_{ST}(t)$ from the hot water tank is assumed to be supplied from an auxiliary boiler. A gas supply amount G(t) is the sum of $G_{FC}(t)$ and a supply $G_B(t)$ to the auxiliary boiler.

$$P_C(t) + P_{PV}(t) + P_{FC}(t) + P_{SB}(t) = P_D(t) + P_H(t) \tag{2}$$

$$\alpha H(t-1) + Q_{FC}(t) + Q_H(t) = H(t) + Q_{ST}(t) \tag{3}$$

$$Q_{ST}(t) + Q_B(t) = Q_D(t) \tag{4}$$

$P_H(t)$: power consumption of the reverse power flow prevention heater

$Q_H(t)$: heat generation amount of the reverse power flow prevention heater

$\alpha$: hot water storage efficiency

The constraint to prohibit the reverse power flow from the storage battery 102 and the FC unit 103 to the power grid 6 is expressed as, for example, equation (5). The constraint representing the capacity of the storage battery 102 is expressed as, for example, equation (6). The constraint representing the hot water storage capacity of the FC unit 103 is expressed as, for example, equation (7).

$$P_{FC}(t) + P_{SB}(t) \leq P_D(t) + P_H(t) \tag{5}$$

$$S_{min} \leq S(t) \leq S_{max} \tag{6}$$

$$H_{min} \leq H(t) \leq H_{max} \tag{7}$$

$H_{min}$: lower limit value of hot water storage capacity

$H_{max}$: upper limit value of hot water storage capacity

$S_{min}$: lower limit value of storage battery capacity

$S_{max}$: upper limit value of storage battery capacity

The calculation unit 300c calculates the schedule of the power generation $P_{FC}(t)$ of the FC unit 103 and the schedule of the charge/discharge $P_{SB}(t)$ of the storage battery 102 by optimization calculation for minimizing the heat/electricity balance (energy cost) based on the power demand, hot water demand, PV power generation amount, unit prices of electricity and gas, sales price of power, and the like. As the optimization algorithm, for example, a genetic algorithm is usable.

As an example of fitness Fit to be maximized in the genetic algorithm, the function of equation (8) can be considered. The right-hand side of equation (8) represents the reciprocal of the sum of a monotone increasing function f(C) (f(C) > 0) using a heat/electricity balance C per day as an argument and the cost for the discontinuity of device operation. The heat/electricity balance C is given by equation (9). The monotone increasing function meeting f(C) > 0 is used because the heat/electricity balance C may be negative when the power generation amount largely exceeds the power demand of the household.

$$Fit = \frac{1}{f(c) + \text{cost necessary for discontinuity of device operation}} \qquad (8)$$

$$C = \sum_{t=0}^{23}(c_F G(t) + c_E(t)P_C(t)) \qquad (9)$$

$$C_E(t): \begin{cases} \text{unit price of electricity (¥/kWh)} & P_C(t) > 0 \\ \text{PV sales price (¥/kWh)} & P_C(t) \leq 0 \end{cases}$$

$C_F$ : unit price of gas (¥/kcal)

A control unit 300d generates operation and stop instructions, output target values, and the like for charge/discharge of the storage battery 102 or power generation of the FC unit 103 (hereinafter, these instructions or values are generally called as a control information) based on the result of optimal scheduling. The control information is generated, for example, every time the optimal scheduling is executed. The generated control information is transmitted to the home gateway 7 in the home 100. The customer instructs, via the user interface 105a, the system to permit or prohibit control based on the transmitted control information.

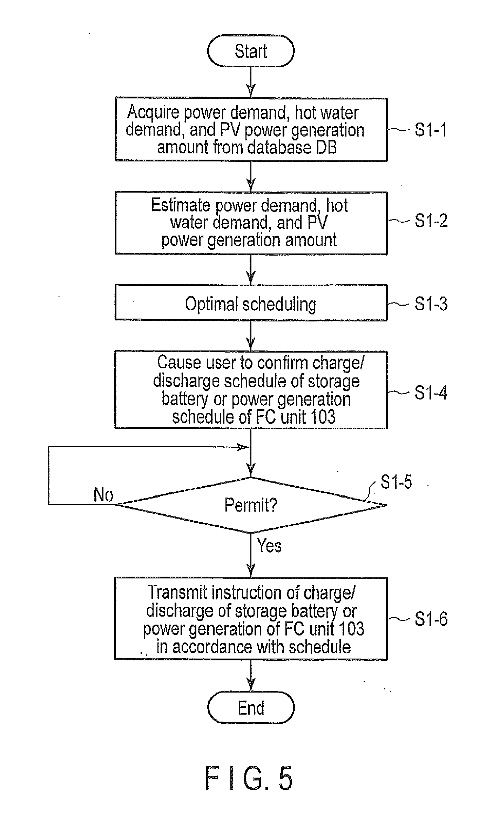

FIG. 5 is a flowchart showing an example of a processing procedure according to the first embodiment. An estimated power demand, estimated hot water demand, estimated PV power generation amount, and the like are necessary for the optimization operation. Hence, the optimization operation is executed, for example, in synchronism with the timings of estimation calculation which is executed several times a day.

Referring to FIG. 5, the estimation unit 300b acquires the power demand, hot water demand, and PV power generation amount for every predetermined time from the database DB (step S1-1). In this step, past log data may be acquired. Next, the estimation unit 300b estimates the power demand, hot water demand, and PV power generation amount for every predetermined time to calculate the operation schedules (step S1-2).

The calculation unit 300c calculates the schedule of the power generation amount of the FC unit 103 for every predetermined time and the schedule of the charge/discharge amount of the storage battery 102 for every predetermined time so as to minimize the heat/electricity balance (step S1-3). The calculated operation schedules are stored in the database DB.

Next, the system transmits a message signal including the operation schedule of the storage battery 102 or the operation schedule of the FC unit 103 to the terminal 105 via the IP network 200. The terminal 105 interprets the message signal and displays the operation schedule on the interface (step S1-4). The routine from the message signal transmission to the display is executed periodically or in response to a request from the user.

The cloud computing system 300 waits for arrival of a permission message signal (step S1-5). The permission message signal represents that execution of the operation schedule is permitted by the user. When the permission message signal has arrived (Yes in step S1-5), the control unit 300c transmits control information to the home gateway 7 in the home 100 via the IP network 200 (step S1-6).

The control information includes information to control the electrical equipment 5 in the home 100 in accordance with the permitted operation schedule. The control information includes, for example, operation and stop instructions, output target values, and the like for charge/discharge of the storage battery 102 or power generation of the FC unit 103. The procedure of steps S1-1 to S1-6 is repeated at the time interval of scheduling.

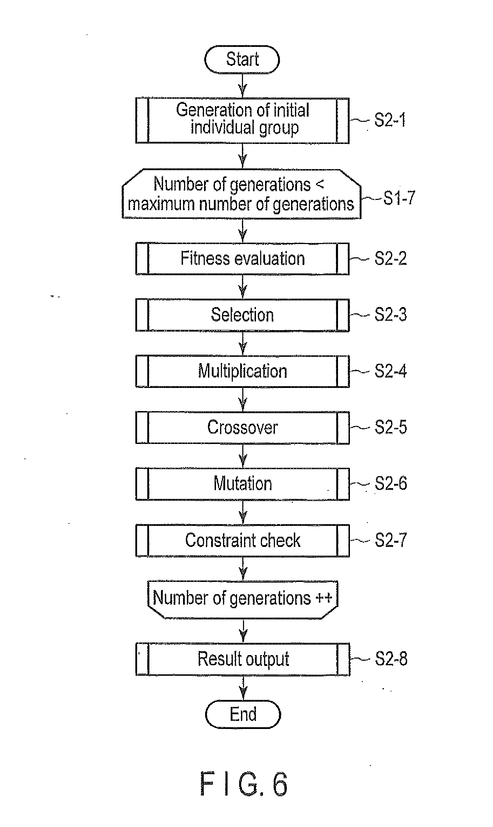

FIG. 6 is a flowchart showing an example of the procedure of the optimization operation according to the embodiment. A genetic algorithm will be exemplified as the optimization algorithm. The processing procedure of the genetic algorithm will be described below.

(Step S2-1) Generation of Initial Individual Group

In this step, the calculation unit 300c generates n initial individuals, where n is a random value or a value based on a past result value. The genes of the individuals are, for example, the operation and stop of the FC unit 103, the power generation amount of the FC unit 103, and the charged/discharged power of the storage battery 102 at the time t. Gene sequences corresponding to, for example, one day (24 hrs) can be provided. Each individual is a set of gene sequences of the FC unit 103 and the storage battery 102.

(Step S2-2) Fitness Evaluation

In this step, the calculation unit 300c reverses the bits of the genes of each individual that does not meet the constraints, thereby modifying the individual such that is meets the constraints. When n individuals meeting the constraints are generated, the calculation unit 300c calculates the fitness of each individual and the average fitness of the generation. The average fitness of a given generation is compared with the average fitness of two previous generations. If the result is equal to or smaller than an arbitrarily set value $\varepsilon$, the calculation unit 300c ends the algorithm.

(Step S2-3) Selection

In this step, the calculation unit 300c removes individuals that do not meet the constraints. Hence, the individuals that do not meet the constraints are selected. If there are individuals in a predetermined number or more, individuals whose fitness is poor (low) are removed to maintain the number of individuals below the predetermined number.

(Step S2-4) Multiplication

In this step, if the number of individuals is smaller than a predefined number of individuals, the calculation unit 300c multiplies an individual having the best fitness.

(Step S2-5) Crossover

The calculation unit 300c performs pairing at random. The pairing is performed as much as the percentage (crossover rate) to the total number of individuals. A gene locus is selected at random for each pair, and one-point crossover is performed.

(Step S2-6) Mutation

In this step, the calculation unit 300c randomly selects individuals of a predetermined percentage (mutation rate) of the total number of individuals and inverts the bits of the genes of arbitrary (randomly decided) gene loci of each individual.

(Step S2-7) Constraint Check

The procedure of step S2-2 to step S2-7 is repeated until a condition given by number of generations < maximum number of generations is met while incrementing the number of generations (loop of step S1-7). If this condition is met, the calculation unit 300c outputs the result (step S2-8), and ends the calculation procedure.

As described above, according to this embodiment, it is possible to efficiently obtain the power generation schedule of the FC unit or the charge/discharge schedule of the storage battery so as to minimize or suppress the total energy cost of each home 100. That is, in the first embodiment, optimal scheduling is executed using the service (or resource) of the cloud computing system 300. It is therefore possible to reduce the load on the information device installed in the home 100.

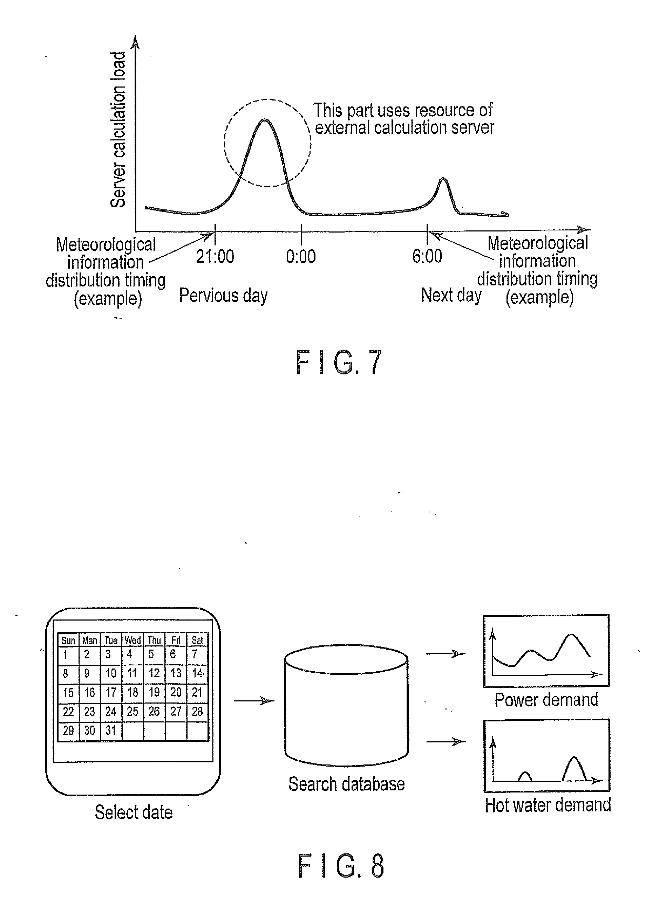

FIG. 7 is a schematic view showing transition of the calculation load in a day. The calculation of optimal scheduling with a heavy load is executed several times a day at a timing immediately after reception of meteorological information. For example, when the meteorological information is distributed at 21:00 and 6:00, the peaks of calculation load concentrate to the nearby time zones. Hence, when the calculation load in these time zones is distributed using the cloud service, the service provider can remarkably suppress the equipment investment and the like. This is because the computer resource can flexibly be reinforced in accordance with the varying calculation load, instead of providing the service using a fixed dedicated server computer resource.

For example, assume that a plurality of server computers SV1 to SV5 are involved in the operation. Assume that one server computer SV1 is caused to perform calculation for 100 homes 100. In a light-load time zone, the server computer SV1 can cover the calculation by its capability. However, during a predetermined period (for example, 30 min) after reception of meteorological information, the resource of the server computer SV1 may be insufficient because the load increases.

In a heavy-load time zone, the server computers SV2 to SV5 are also caused to share the calculation, and the calculation result is stored in the database DB. This makes it possible to acquire data about the calculation result from the database DB and control the electrical equipment of each customer.

In this case, the server computer SV1 first sends a query message signal to the other server computers SV2 to SV5 to query whether there is enough resource for calculation. The server computer SV1 transmits various kinds of data of the processing target to the server computer SV that has returned a response message signal representing approval of sharing, and requests the server computer SV to share the processing.

Note that the data necessary for calculation are given an identifier (customer number or the like) capable of specifying the customer. The server computer SV1 can specify each customer based on the identifier and also individually control the electrical equipment of each customer.

There has also been examined, in the existing technique, decreasing the computer resource of the customer by leaving optimization calculation to an Internet application service provider (ASP) and using the resource of a server computer installed at the data center or the like. However, this supposedly requires the service provider to continuously make an enormous investment in equipment by increasing the database capacity along with an increase in the number of customers or reinforcing the maximum computing power of the dedicated server computer in accordance with the peak of the calculation load.

According to the first embodiment, however, the risk of the increase in calculation load or database capacity can be resolved for both the calculation and the service provider. It is therefore possible to suppress the facility cost. Additionally, according to the first embodiment, the customer's intention can be reflected on energy saving of the electrical equipment. As described above, according to the first embodiment, it is possible to provide an energy management system, an energy management method, a program, a server apparatus, and a client apparatus, which can reduce the load of calculation.

[Second Embodiment]

FIG. 8 is a view for explaining the effect of an energy management system according to the second embodiment. The arrangement according to the second embodiment is the same as in the first embodiment.

In the second embodiment, a calendar as shown in FIG. 8 is displayed on the interface of a terminal 105. The calendar is displayed on the interface of the terminal 105 in, for example, step S1-4 of FIG. 5 together with schedule information. The user designates an arbitrary past date from the displayed calendar. A date designation message signal representing the designated date is transmitted to an estimation unit 300b of a cloud computing system 300. Upon receiving the date designation message signal, the estimation unit 300b reads out the power demand and hot water demand of that date from a database DB and sends them to a calculation unit 300c.

With the above-described procedure, the estimation unit 300b need only read out existing data from the database DB, instead of executing demand estimation calculation. It is therefore possible to greatly simplify processing of power demand estimation and hot water demand estimation and thus largely reduce the calculation load of a server computer SV.

[Third Embodiment]

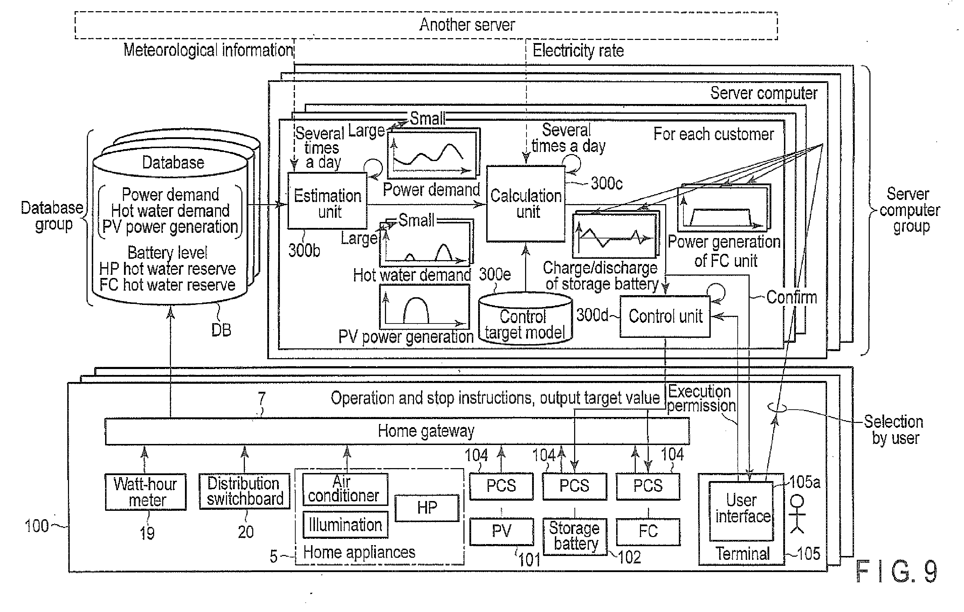

FIG. 9 is a functional block diagram showing an example of an energy management system according to the third embodiment. The same reference numerals as in FIG. 3 denote the same parts in FIG. 9, and only different parts will be described here.

In the third embodiment, an estimation unit 300b reads out, from a database DB, the result value of the power demand of the estimation target customer at the same time in the same day of the immediately preceding week as the estimation day (the date to estimate the demand) as an estimated power demand. Similarly, the result value of the hot water demand of the estimation target customer at the same time in the same day of the immediately preceding week as the estimation day is obtained as an estimated hot water demand. The past result values read out from the database DB are sent to a calculation unit 300c as estimated values. This also makes it possible to greatly simplify processing of power demand estimation and hot water demand estimation and thus largely reduce the calculation load of a server computer SV.

This processing mode can be set by causing the customer to request the cloud computing system via a terminal 105. Setting registration information to decide OK/NG of execution of the processing mode is stored in the database DB.

More specifically, when the user gives a setting input to the interface of the terminal 105, the terminal 105 transmits a message signal concerning the set contents to a cloud computing system 300 via an IP network 200. Upon receiving the message signal, the cloud computing system 300 stores the set contents in a storage area for the transmission source user in the database DB.

The estimation unit 300b confirms, in the midway of the control routine, whether a flag (not shown) representing the presence/absence of mode setting is registered. If the flag is registered, the estimation unit 300b reads out the value of the target customer at the same time in the same day of the immediately preceding week from the database DB and sends it to the calculation unit 300c, as described above.

[Fourth Embodiment]

In the fourth embodiment, an estimation unit 300b reads out two different kinds of power demands, that is, the power demand result value of a day in which the power demand per day was maximum and the power demand result value of a day in which the power demand per day was minimum from a database DB as estimated power demands and sends them to a calculation unit 300c. Similarly, the estimation unit 300b reads out two different kinds of hot water demands, that is, the hot water demand result value of a day in which the power demand per day was maximum and the hot water demand result value of a day in which the power demand per day was minimum from the database DB as estimated hot water demands and sends them to the calculation unit 300c.

The calculation load can be reduced by setting the search target period to a period of a certain span corresponding to, for example, a season (spring, summer, fall, or winter), instead of searching all data stored in the database DB.

The calculation unit 300c calculates operation schedules (the charge/discharge schedule of a storage battery 102, the power generation schedule of an FC unit 103, and the like) of a target home 100 for each of the two different kinds of demand patterns (estimated power demands or estimated hot water demands). The calculated operation schedules are transmitted to a home gateway 7. A terminal 105 notifies the customer of the schedules.

The customer selects and designates one of the operation schedules, and gives an execution permission of the selected operation schedule to a control unit 300d. This makes it possible to form an interactive environment between the energy management system and the customer and operate the electrical equipment based on the schedule close to the desire of the customer.

[Fifth Embodiment]

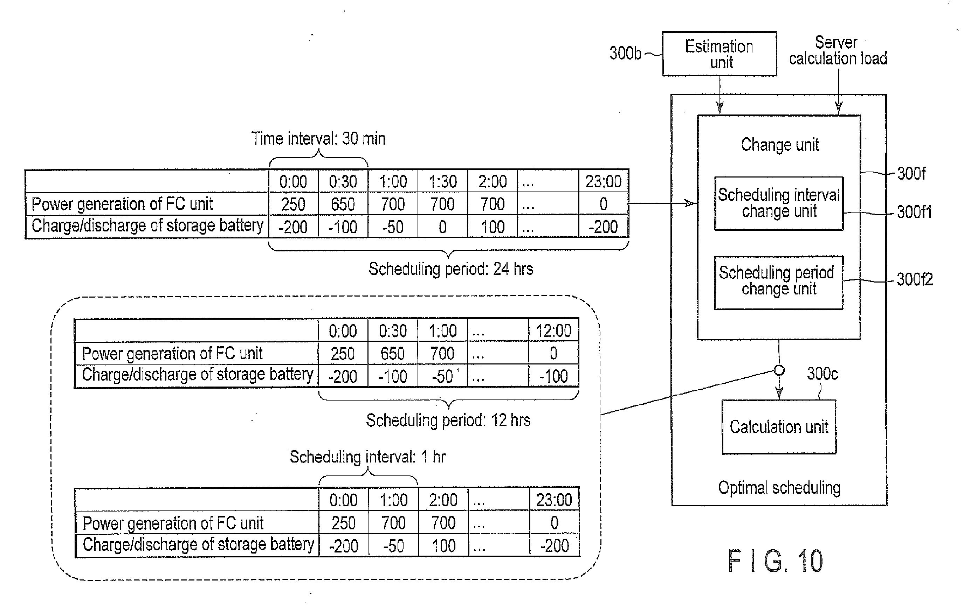

FIG. 10 is a view for explaining the effect of an energy management system according to the fifth embodiment. The system arrangement according to the fifth embodiment is the same as in the first embodiment,

In the fifth embodiment, a change unit 300f changes parameters concerning the calculation of an operation schedule based on demand estimation calculated by an estimation unit 300b and a calculation load detected by a detection unit 300e. An example of the parameter is the time interval of scheduling, that is, the scheduling operation period. The scheduling interval is changed by a scheduling interval change unit 300f1.

Another example of the parameter is the scheduling target period (scheduling period). The scheduling period is changed by a scheduling period change unit 300f2. Each data item stored in a database DB can also be considered as a parameter.

In the first embodiment, the operation schedule is calculated for every predetermined period. In the fifth embodiment, considering that the life pattern changes between customers, the scheduling operation period is changed for each customer. For example, when the customer goes out, the energy demand rarely varies. Hence, the operation period is made longer than in the time when the customer is at home. This makes it possible to suppress the load on the side of a cloud computing system 300 and, in particular, suppress the processing load of a server computer SV and thus efficiently use the operation resource of the entire system.

If the number of customers at home increases, the operation period shortens as a whole, and the load on the side of the cloud computing system 300 increases. To prevent this, when the number of customers exhibiting a relatively large demand variation becomes equal to or larger than a predetermined threshold, the scheduling operation period is changed from a short mode to a long mode. This makes it possible to suppress the load on the side of the cloud computing system 300.

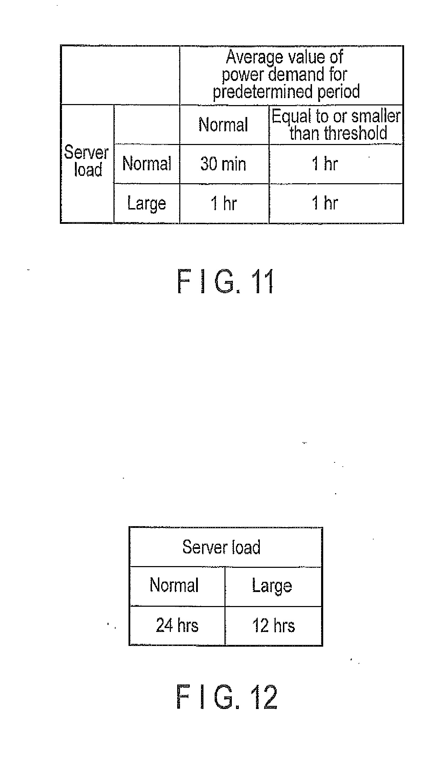

FIGS. 11 and 12 are views for explaining the effect according to the fifth embodiment. As shown in FIG. 11, when the average value of the estimated power demands during a predetermined period is equal to or smaller than a predetermined threshold, it can be determined that the customer is, for example, going out. The change unit 300f makes the scheduling interval longer than usual to reduce the calculation load of a calculation unit 300c. When the calculation load of the server computer SV is equal to or larger than a predetermined threshold, the change unit 300f makes the scheduling interval longer to reduce the calculation load.

As shown in FIG. 12, when the calculation load of the server computer SV is equal to or larger than the predetermined threshold, the change unit 300f makes the scheduling period longer to reduce the load of the calculation unit 300c.

According to the fifth embodiment, it is possible to reduce the calculation load of the cloud computing system 300. Under circumstances where the calculation load can be reduced, the calculation task is distributed to a plurality of servers using the calculation load difference between a plurality of customers. This can avoid load concentration to a specific server and level the load.

Conversely, even when the calculation load of the server computer increases due to a change in an optimization calculation parameter according to a request from a specific customer, the load can be leveled by distributing the optimization calculation of the customer to another server computer. It is therefore possible to improve the service quality after the customer has approved the increase in cost.

[Sixth Embodiment]

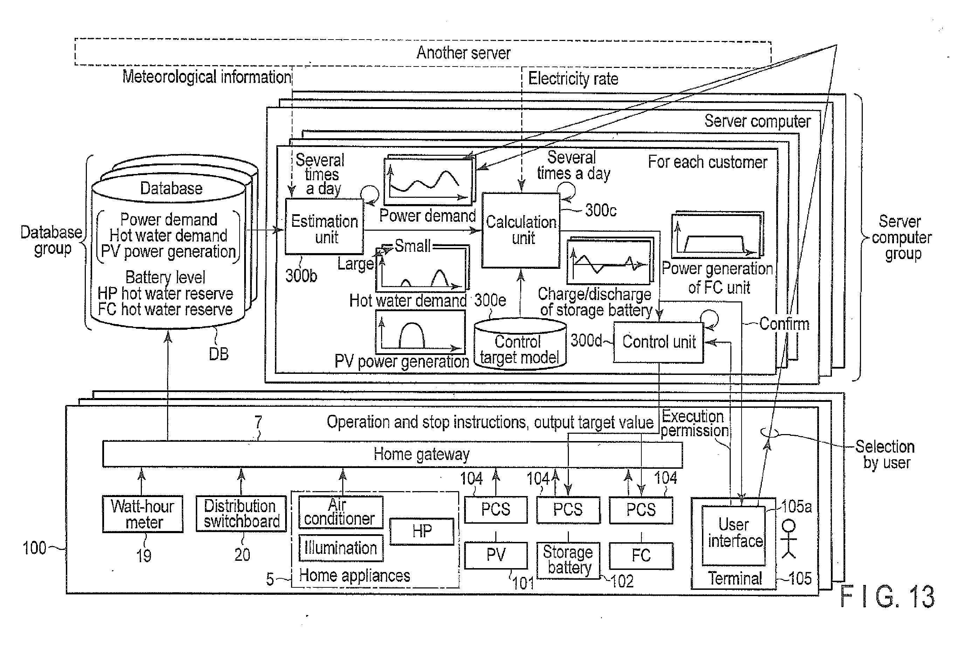

FIG. 13 is a functional block diagram showing an example of an energy management system according to the sixth embodiment. The same reference numerals as in FIG. 9 denote the same parts in FIG. 13, and only different parts will be described here.

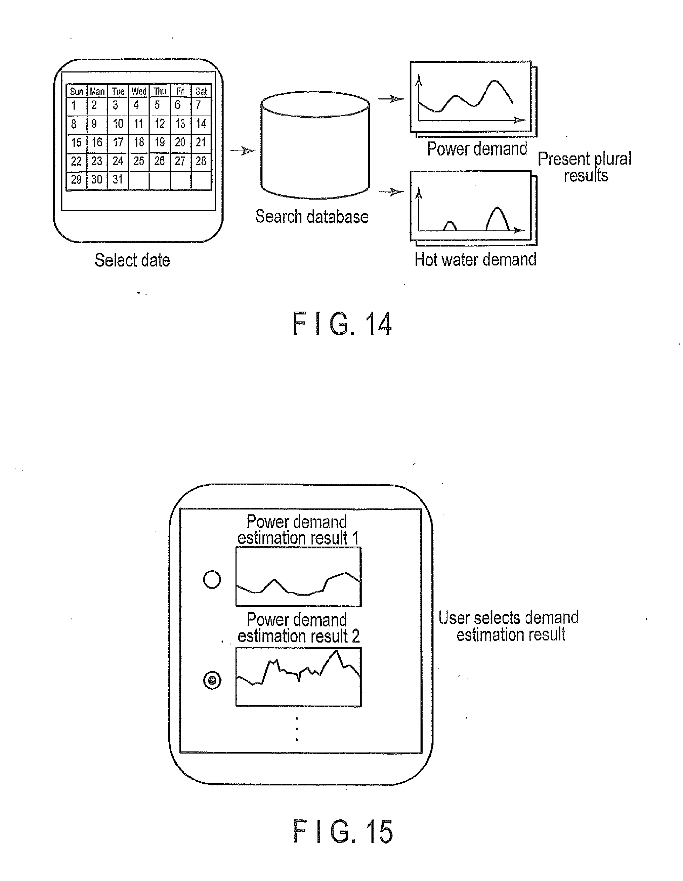

In the sixth embodiment, an estimation unit 300b reads out, from a database DB, a plurality of power demands (estimated values) and a plurality of hot water demands (estimated values) of a date selected by the customer, as shown in FIG. 14. The plurality of demand estimated values are converted into communication data and sent to a terminal 105 or a home gateway 7 via an IP network 200.

The terminal 105 visually displays the plurality of transmitted demand estimated values. Hence, a plurality of demand estimation results are presented to the customer, as shown in FIG. 15. In FIG. 15, two different kinds of estimation results are displayed for the power demand. This also applies to the estimated hot water demand. The customer selects one of the demand estimation results by, for example, clicking on a radio button or designating a result on the touch panel. A cloud computing system 300 is notified of the selection result via the IP network 200.

Upon receiving the notification, a calculation unit 300c calculates the charge/discharge schedule of a storage battery 102 or the power generation schedule of an FC unit 103 corresponding to the demand estimation (demand pattern) selected by the customer. The thus calculated operation schedule is transmitted to the HEMS and then reflected on control of electrical equipment 5 after the customer has permitted execution via, for example, the terminal 105.

In the sixth embodiment, an interface to reflect the customer's intention on energy demand estimation can be provided. That is, the customer can select a demand estimation by himself/herself from a plurality of patterns presented by the system.

The customer's behaviors include unpredictable behaviors such as urgent going out and an unexpected behavior in addition to relatively patterned living behaviors classified into holidays, weekdays, and the like. A behavior deviating from a normal pattern largely affects the power or hot water demand. The operation schedule of the storage battery or FC unit also varies in accordance with the demand. However, it is difficult to predict the customer's behavior on the system side. These circumstances are peculiar to HEMS that is a system for household use, unlike BEMS or FEMS.

In the sixth embodiment, a plurality of estimable demand patterns are presented to the customer in accordance with, for example, a behavior pattern, and the customer is caused to select one of the patterns. In the fourth embodiment, a plurality of already calculated operation schedules are presented. However, the characteristic feature of the sixth embodiment is presenting a plurality of estimation patterns serving as the base of schedule calculation.

For example, it is not always easy for the customer to determine the appropriateness of a calculated operation schedule of the storage battery or FC unit. However, the customer can determine the appropriateness of demand-based information to some degree for either power or hot water based on a plan of going out, staying at home, or the like. Hence, even when a customer's unexpected behavior or a sudden change in plan has occurred, it is possible to calculate an optimum operation schedule following it.

Note that the criterion for estimating the power demand or hot water demand is not limited to the customer's behavior. Another criterion such as a weather forecast or a request of scheduled blackout is also applicable, as a matter of course. In the seventh embodiment, power supply and demand estimation using a weather forecast will be explained.

[Seventh Embodiment]

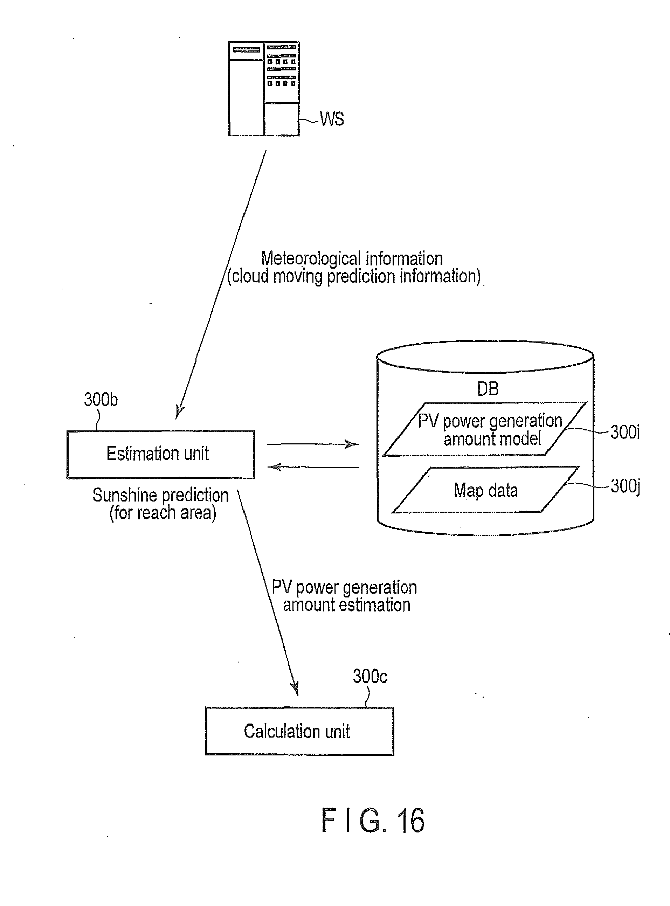

FIG. 16 is a functional block diagram showing a characteristic feature of an energy management system according to the seventh embodiment. In the seventh embodiment, an energy supply amount by a PV system 101 provided in a customer's home is estimated in place of an energy demand.

Referring to FIG. 16, an estimation unit 300b acquires meteorological information from a meteorological information server WS. In the seventh embodiment, cloud moving prediction information is exemplified as the meteorological information. The cloud moving prediction information can be generated by, for example, processing an image acquired by a meteorological radar or a meteorological satellite.

A database DB stores a PV power generation amount model 300i and map data 300j as data according to the embodiment. The PV power generation amount model 300i is data that models the characteristic of the PV system 101.

For example, a parameter such as a power generation amount with respect to sunshine (Lux) is recorded.

The map data 300j is a database obtained by dividing a control target area (city/town/village, prefecture, or state where a home 100 is located) into, for example, meshes and creating a digital map. Preferably, the resolution of the map data 300j is set high enough to be processable in combination of the cloud moving prediction information.

The estimation unit 300b acquires the cloud moving prediction information from the meteorological information server WS and predicts the movement of clouds in the target area by referring to the map data 300j. The estimation unit 300b time-serially estimates, for each mesh area, time zones in which the area will be covered with clouds and time zones in which the sky will be clear. Based on the result, the estimation unit 300b estimates the power generation amount of the PV system 101 for each mesh by referring to the PV power generation amount model 300i.

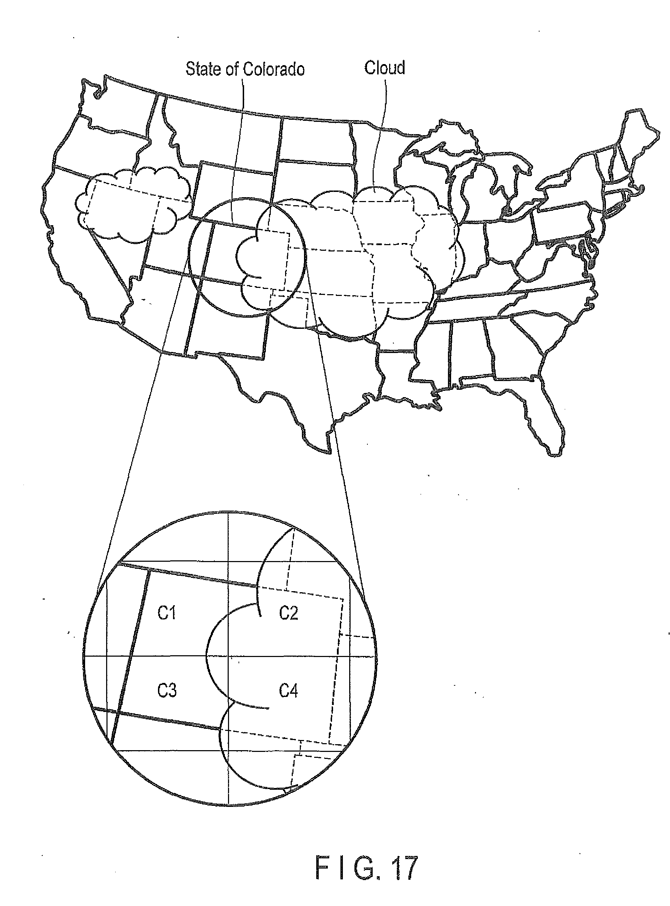

FIG. 17 is a view for explaining the effect according to the seventh embodiment. FIG. 17 illustrates moving clouds together on the map represented by the map data 300j. For example, in the state of Colorado of U.S.A., exactly the eastern half of it is covered with clouds. The enlarged view shows meshes that divide the state of Colorado into four areas C1 to C4.

The presence/absence of clouds and the power generation amount of the PV system 101 are closely related to each other. Hence, the power generation amount can time-serially be calculated by predicting the movement or shape change of clouds. For example, the power generation amount in the areas C1 and C3 can be estimated to be larger than that in the areas C2 and C4. Specific numerical values can be calculated using the PV power generation amount model 300i.

In the seventh embodiment, the movement of clouds is predicted, and the power generation amount is estimated by applying the result to the PV power generation amount model 300i. In addition, the energy supply amount in the target home 100 is estimated by referring to the map data 300j as well. Note that to specify the customer home on the digital map, the address filled in on the application at the time of contract can be referred to. Alternatively, the position of the customer home may be specified using the GPS (Global Positioning System).

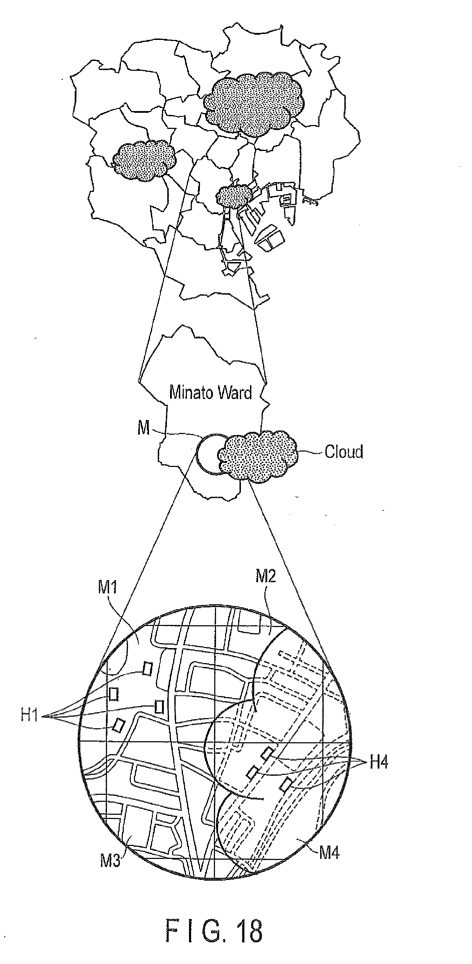

FIG. 18 is a view for explaining the effect according to the seventh embodiment. FIG. 18 illustrates the Minato Ward out of the 23 wards of Tokyo in Japan as an example. FIG. 18 indicates that the same effect as described above can be obtained even when the geographic, scale is changed.

An area M in the Minato Ward is divided into four meshes M1 to M4. The power generation amount of the PV system is larger in the blocks M1 and M3 that are not covered with clouds than in the blocks M2 and M4 that are covered with clouds. Hence, the power generation amount of a building H1 in the block M1 is estimated to be larger than that of a building H4 in the block M4. The clouds move, thicken, or disappear along with the elapse of time. Since such changes can also be predicted using the meteorological information, the PV power generation amount can time-serially be estimated.

In the seventh embodiment, PV power generation amount estimation can be executed at once for buildings belonging to the same area or same block in each geographical region (area, block, or a similar region). For example, in the block M1, the total PV power generation amount of the plurality of buildings H1 in the same block is estimated, instead of individually estimating the PV power generation amounts of the respective buildings H1. This also applies to the blocks M2, M3, and M4.

This form corresponds to the form shown in FIG. 3, 9, or 13, which implements the estimation unit 300b and the calculation unit 300c as the functional objects provided for a plurality of customers. This can largely decrease the calculation amount and reduce the load on a cloud computing system 300 or save the calculation resource. In addition, it is possible to take full advantage of providing the cloud computing system 300 with the estimation calculation function.

With the above-described arrangement, according to the seventh embodiment, the plurality of customers can share the operation resource of the estimation unit 300b, and the energy self-supply amount of the homes 100 in, for example, a predetermined area can also be estimated. This also makes it possible to obtain an effect of, for example, increasing the operation schedule calculation accuracy.

In the seventh embodiment, the PV power generation amount model 300i that models the power generation performance of the PV system 101 is used. The PV power generation amount model 300i can be used commonly for the plurality of customers. Hence, the estimation operation can be executed at once for the plurality of customers. This can greatly reduce the operation load as compared to estimating the PV power generation amount of each customer.

Additionally, in the seventh embodiment, the geographical region is divided into, for example, meshes and specified. For this reason, application can be done not only to estimation of the PV power generation amount but also to more detailed optimal control.

For example, if the power demand is estimated to be larger than the power supply amount, the administration may request power saving, scheduled blackout, or rolling blackout. These requests are issued for designated areas and therefore have a great affinity for the seventh embodiment.

That is, since demand estimation and power generation amount estimation can be executed for each area, detailed optimal power distribution control can be implemented by employing the power saving request as an estimation parameter. For example, control can be done to store power in each area and distribute the stored power to blackout areas based on a scheduled blackout plan. In addition, when a plurality of area meshes are arbitrarily combined, the geographical region of the optimal control can time-serially dynamically be changed.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. An energy management system including a plurality of client apparatuses, and a server apparatus capable of communicating with the plurality of client apparatuses,
   the server apparatus comprising:

   an acquisition unit configured to acquire, from the client apparatus, data concerning electrical equipment to which a power grid supplies power;
   an estimation unit configured to estimate an energy demand of the electrical equipment based on the data;
   a calculator configured to calculate an operation of the electrical equipment to optimize energy concerning the electrical equipment based on the estimated energy demand; and
   a controller configured to transmit control information to control the electrical equipment based on the calculated operation to the client apparatus.

2. The energy management system according to claim 1, wherein the client apparatus comprises an interface unit configured to reflect an intention of a customer of the power on the control information transmitted from the controller.

3. The energy management system according to claim 1, further comprising a database configured to store the energy demand,
   wherein the estimation unit reads out a past energy demand stored in the database and estimates the energy demand.

4. The energy management system according to claim 2, wherein the estimation unit estimates a plurality of energy demands based on different criteria,
   the calculator calculates a plurality of operations corresponding to the plurality of estimated energy demands, respectively,
   the controller transmits a plurality of pieces of control information based on the plurality of calculated operations to the client apparatus, and
   the interface unit permits control based on control information selected by the customer out of the plurality of pieces of control information transmitted from the controller.

5. The energy management system according to claim 1, further comprising a database configured to store the acquired data and a control target model of the electrical equipment,
   wherein the calculator calculates the operation based on the data and the control target model stored in the database.

6. The energy management system according to claim 1, wherein the calculator calculates the operation by a genetic algorithm based on a unit energy cost and the estimated energy demand.

7. The energy management system according to claim 1, wherein the server apparatus further comprises a changer configured to change a parameter concerning the calculation of the operation based on the estimated energy demand.

8. The energy management system according to claim 1, wherein the server apparatus further comprises:

   a detector configured to detect a load concerning the calculation of the operation by the calculator; and
   a changer configured to change a parameter concerning the calculation of the operation to suppress deviation of the load from a standard.

9. The energy management system according to claim 2, wherein the estimation unit estimates a plurality of energy demands based on different criteria,

the interface unit presents the customer the plurality of estimated energy demands, and notifies the server apparatus of an energy demand selected by the customer out of the plurality of presented energy demands,
the calculator calculates the operation based on the energy demand selected by the customer, and
the controller transmits a plurality of pieces of control information based on the calculated operation to the client apparatus.

10. The energy management system according to claim 1, wherein the estimation unit estimates an energy supply amount by an energy generation apparatus for generating energy used to operate the electrical equipment out of renewable energy.

11. The energy management system according to claim 10, wherein the energy generation apparatus comprises a photovoltaic power generation system, and
the estimation unit estimates a power generation amount of the photovoltaic power generation system in an area of a control target based on meteorological information representing a cloud moving prediction, a photovoltaic power generation model that models a characteristic of the photovoltaic power generation system, and map data of the area.

12. The energy management system according to claim 1, wherein the client apparatus comprises a communication unit configured to transmit the data to the server apparatus and request the calculation of the operation.

13. The energy management system according to claim 1, wherein at least one of the acquisition unit, the estimation unit, the calculator, and the controller is a functional object distributively arranged in a cloud computing system.

14. An energy management method applicable to an energy management system including a plurality of client apparatuses, and a server apparatus capable of communicating with the plurality of client apparatuses, the method comprising:

by the client apparatus, transmitting, to the server apparatus, data concerning electrical equipment to which a power grid supplies power and request calculation of an operation of the electrical equipment;
by the server apparatus,
acquiring the data from the client apparatus;
estimating an energy demand of the electrical equipment based on the data;
calculating the operation of the electrical equipment to optimize energy concerning the electrical equipment based on the estimated energy demand; and
transmitting control information to control the electrical equipment based on the calculated operation to the client apparatus.

15. The energy management method according to claim 14, wherein the client apparatus reflects an intention of a customer of the power on the control information transmitted from the server apparatus.

16. The energy management method according to claim 14, wherein in the estimating, a past energy demand stored in a database configured to store the energy demand is read out, and the energy demand is estimated.

17. The energy management method according to claim 15, wherein in the estimating, a plurality of energy demands are estimated based on different, criteria,
in the calculating, a plurality of operations corresponding to the plurality of estimated energy demands, respectively, are calculated,
in the controlling, a plurality of pieces of control information based on the plurality of calculated operations are transmitted to the client apparatus, and
in the reflecting, control based on control information selected by the customer out of the plurality of pieces of control information transmitted from the client apparatus is permitted.

18. The energy management method according to claim 14, wherein in the calculating, the operation is calculated based on the acquired data and a control target model of the electrical equipment stored in a database configured to store the data and the control target model.

19. The energy management method according to claim 14, wherein in the calculating, the operation is calculated by a genetic algorithm based on a unit energy cost and the estimated energy demand.

**20.** The energy management method according to claim 14, further comprising changing a parameter concerning the calculation of the operation based on the estimated energy demand.

**21.** The energy management method according to claim 14, further comprising:

detecting a load concerning the calculation of the operation by the server apparatus; and
changing a parameter concerning the calculation of the operation to suppress deviation of the load from a standard.

**22.** A program to be executed by a computer, the program comprising:

acquiring, from a client apparatus, data concerning electrical equipment to which a power grid supplies power;
estimating an energy demand of the electrical equipment based on the data;
calculating an operation of the electrical equipment to optimize energy concerning the electrical equipment based on the estimated energy demand; and
transmitting control information to control the electrical equipment based on the calculated operation to the client apparatus.

**23.** The program according to claim 22, wherein in the estimating, a past energy demand stored in a database configured to store the energy demand is read out, and the energy demand is estimated.

**24.** The program according to any one of claims 22 and 23, wherein in the estimating, a plurality of energy demands are estimated based on different criteria,
in the calculating, a plurality of operations corresponding to the plurality of estimated energy demands, respectively, are calculated, and
in the controlling, a plurality of pieces of control information based on the plurality of calculated operations are transmitted to the client apparatus.

**25.** The program according to claim 22, wherein in the calculating, the operation is calculated based on the acquired data and a control target model of the electrical equipment stored in a database configured to store the data and the control target model.

**26.** The program according to claim 22, wherein in the calculating, the operation is calculated by a genetic algorithm based on a unit energy cost and the estimated energy demand.

**27.** The program according to claim 22, further comprising a command for changing a parameter concerning the calculation of the operation based on the estimated energy demand.

**28.** The program according to claim 22, further comprising:

a command for detecting a load concerning the calculation of the operation ; and
a command for changing a parameter concerning the calculation of the operation to suppress deviation of the load from a standard.

**29.** A program to be executed by a computer of a customer to which a power grid supplies power, comprising:

transmitting data concerning electrical equipment of the customer to a server apparatus capable of communicating with the computer and requesting the server apparatus to calculate an operation of the electrical, equipment.

**30.** The program according to claim 29, further comprising a command for reflecting an intention of the customer on the control information transmitted from the server apparatus.

**31.** The program according to claim 30, wherein in the reflecting, control based on control information selected by the customer out of the plurality of pieces of control information transmitted from the server apparatus is permitted.

**32.** A server apparatus capable of communicating with a client apparatus, comprising:

an acquisition unit configured to acquire, from the client apparatus, data concerning electrical equipment to which a power grid supplies power;

an estimation unit configured to estimate an energy demand of the electrical equipment based on the data;

a calculator configured to calculate an operation of the electrical equipment to optimize energy concerning the electrical equipment based on the estimated energy demand; and

a controller configured to transmit control information to control the electrical equipment based on the calculated operation to the client apparatus.

33. The server apparatus according to claim 32, wherein the estimation unit reads out a past energy demand stored in a database configured to store the energy demand and estimates the energy demand.

34. The server apparatus according to any one of claims 32 and 33, wherein the estimation unit estimates a plurality of energy demands based on different criteria,

the calculator calculates a plurality of operations corresponding to the plurality of estimated energy demands, respectively, and

the controller transmits a plurality of pieces of control information based on the plurality of calculated operations to the client apparatus.

35. The server apparatus according to claim 32, wherein the calculator calculates the operation based the acquired data and a control target model of the electrical equipment stored in a database configured to store the data and the control target model.

36. The server apparatus according to claim 32, wherein the calculator calculates the operation by a genetic algorithm based on a unit energy cost and the estimated energy demand.

37. The server apparatus according to claim 32, further comprising a changer configured to change a parameter concerning the calculation of the operation based on the estimated energy demand.

38. The server apparatus according to claim 32, further comprising:

a detector configured to detect a load concerning the calculation of the operation by the calculator; and
a changer configured to change a parameter concerning the calculation of the operation to suppress deviation of the load from a standard.

39. The server apparatus according to any one of claims 32 and 33, wherein the estimation unit estimates a plurality of energy demands based on different criteria, and

the calculator calculates the operation based on the energy demand selected by the customer of the power from the plurality of estimated energy demands, and

the controller transmits a plurality of pieces of control information based on the calculated operation to the client apparatus.

40. The server apparatus according to claim 32, wherein the estimation unit estimates an energy supply amount by an energy generation apparatus for generating energy used to operate the electrical equipment out of renewable energy.

41. The server apparatus according to claim 40, wherein the energy generation apparatus comprises a photovoltaic power generation system, and

the estimation unit estimates a power generation amount of the photovoltaic power generation system in an area of a control target based on meteorological information representing a cloud moving prediction, a photovoltaic power generation model that models a characteristic of the photovoltaic power generation system, and map data of the area.

42. The server apparatus according to claim 32, wherein at least one of the acquisition unit, the estimation unit, the calculator, and the controller is a functional object distributively arranged in a cloud computing system.

43. A client apparatus capable of communicating with a server apparatus that calculates an operation of electrical equipment to which a power grid supplies power, comprising:

a communication unit configured to transmit data concerning the electrical equipment to the server apparatus and request calculation of the operation.

**44.** The client apparatus according to claim 43, further comprising an interface unit configured to reflect an intention of a customer of the power on control information transmitted from the server apparatus.

**45.** The client apparatus according to claim 44, wherein the interface unit permits control based on control information selected by the customer out of a plurality of pieces of control information transmitted from the server apparatus.

**46.** The client apparatus according to claim 44, wherein the interface unit presents the customer a plurality of energy demands estimated by the server apparatus, and
notifies the server apparatus of an energy demand selected by the customer out of the plurality of presented energy demands.

Distributed power supply

Photovoltaic
power generation

Wind power
generation

Storage system
for power

Power
plant

Storage battery

Storage
battery

Social infrastructure

EV, light—rail, new
transportation system

Charge station

Communication
grid

Power grid

HEMS

Smart
meter

Distribution
switchboard

Home
gateway

Home solar
panel

EV

Storage
battery

Home appliances
(information
appliances)

BEMS

Smart
meter

Distribution
switchboard

Storage battery

Control server

LED illumination

Solar panel

Air conditioner

FIG. 1

FIG.2

EP 2 840 545 A1

F I G. 3

FIG. 4

$P_H$: Power consumption of reverse power flow prevention heater

$Q_H$: Heat generation amount of reverse power flow prevention heater

Start

Acquire power demand, hot water demand, and PV power generation amount from database DB — S1-1

Estimate power demand, hot water demand, and PV power generation amount — S1-2

Optimal scheduling — S1-3

Cause user to confirm charge/ discharge schedule of storage battery or power generation schedule of FC unit 103 — S1-4

Permit? — S1-5

No

Yes

Transmit instruction of charge/ discharge of storage battery or power generation of FC unit 103 in accordance with schedule — S1-6

End

F I G. 5

Start

Generation of initial
individual group — S2-1

Number of generations <
maximum number of generations — S1-7

Fitness evaluation — S2-2

Selection — S2-3

Multiplication — S2-4

Crossover — S2-5

Mutation — S2-6

Constraint check — S2-7

Number of generations ++

Result output — S2-8

End

FIG. 6

FIG. 7

FIG. 8

FIG. 9

EP 2 840 545 A1

300b — Estimation unit

Server calculation load

Time interval: 30 min

| | 0:00 | 0:30 | 1:00 | 1:30 | 2:00 | ... | 23:00 |
|---|---|---|---|---|---|---|---|
| Power generation of FC unit | 250 | 650 | 700 | 700 | 700 | ... | 0 |
| Charge/discharge of storage battery | -200 | -100 | -50 | 0 | 100 | ... | -200 |

Scheduling period: 24 hrs

Change unit

Scheduling interval change unit — 300f1

— 300f

Scheduling period change unit — 300f2

| | 0:00 | 0:30 | 1:00 | ... | 12:00 |
|---|---|---|---|---|---|
| Power generation of FC unit | 250 | 650 | 700 | ... | 0 |
| Charge/discharge of storage battery | -200 | -100 | -50 | ... | -100 |

Scheduling period: 12 hrs

Scheduling interval: 1 hr

| | 0:00 | 1:00 | 2:00 | ... | 23:00 |
|---|---|---|---|---|---|
| Power generation of FC unit | 250 | 700 | 700 | ... | 0 |
| Charge/discharge of storage battery | -200 | -50 | 100 | ... | -200 |

Calculation unit

300c

Optimal scheduling

F I G. 10

| | Average value of power demand for predetermined period | |
|---|---|---|
| | | Normal | Equal to or smaller than threshold |
| Server load | Normal | 30 min | 1 hr |
| | Large | 1 hr | 1 hr |

F I G. 11

| Server load | |
|---|---|
| Normal | Large |
| 24 hrs | 12 hrs |

F I G. 12

FIG. 13

| Sun | Man | Tue | Wed | Thu | Fri | Sat |
|-----|-----|-----|-----|-----|-----|-----|
| 1 | 2 | 3 | 4 | 5 | 6 | 7 |
| 8 | 9 | 10 | 11 | 12 | 13 | 14 |
| 15 | 16 | 17 | 18 | 19 | 20 | 21 |
| 22 | 23 | 24 | 25 | 26 | 27 | 28 |
| 29 | 30 | 31 | | | | |

Select date

Search database

Power demand

Present plural results

Hot water demand

FIG. 14

Power demand estimation result 1

Power demand estimation result 2

User selects demand estimation result

FIG. 15

State of Colorado    Cloud

C1    C2

C3    C4

FIG. 17

Minato Ward

M

Cloud

M1

M2

H1

H4

M3

M4

FIG. 18

## INTERNATIONAL SEARCH REPORT

| International application No. |
|---|
| PCT/JP2013/060955 |

**A. CLASSIFICATION OF SUBJECT MATTER**
*G06Q50/06*(2012.01)i, *H02J3/00*(2006.01)i, *H02J3/32*(2006.01)i, *H02J3/38*
(2006.01)i, *H02J3/46*(2006.01)i, *H02J13/00*(2006.01)i

According to International Patent Classification (IPC) or to both national classification and IPC

**B. FIELDS SEARCHED**

Minimum documentation searched (classification system followed by classification symbols)
G06Q50/06, H02J3/00, H02J3/32, H02J3/38, H02J3/46, H02J13/00

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-341646 A  (Meidensha Corp.),<br>08 December 2005 (08.12.2005),<br>0015 to 0061<br>(Family: none) | 1-46 |
| Y | JP 2004-180440 A  (Toho Gas Co., Ltd.),<br>24 June 2004 (24.06.2004),<br>0007 to 0071<br>(Family: none) | 1-46 |
| Y | JP 2004-274936 A  (Osaka Gas Co., Ltd.),<br>30 September 2004 (30.09.2004),<br>0008 to 0021<br>(Family: none) | 5,18,25,35 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>22 May, 2013 (22.05.13) | Date of mailing of the international search report<br>04 June, 2013 (04.06.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/060955

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2010-124644 A  (Nippon Telegraph and Telephone Corp.), 03 June 2010 (03.06.2010), 0010, 0021 to 0028, 0044 to 0056, 0061 (Family: none) | 6,10-11,19, 26,36,40-41 |
| Y | WO 2011/086886 A1  (Panasonic Corp.), 21 July 2011 (21.07.2011), 0238 & US 2012/0072040 A1    & EP 2525470 A1 & CN 102349213 A | 13,42 |
| A | JP 2002-288319 A  (Hitachi, Ltd.), 04 October 2002 (04.10.2002), 0005 to 0024 (Family: none) | 1-3,14-16, 22-24,29, 32-33,43 |
| A | JP 2007-199862 A  (Nippon Telegraph and Telephone Corp.), 09 August 2007 (09.08.2007), 0009 to 0023 (Family: none) | 1-46 |
| A | JP 2011-142753 A  (Panasonic Corp.), 21 July 2011 (21.07.2011), 0012 to 0037 (Family: none) | 1-46 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011092002 A
- JP 2010204833 A
- JP 2011083084 A
- JP 6276681 A
- JP 2004112869 A
- JP 2011200040 A
- JP 2009240080 A